# EUROPÄISCHE PATENTSCHRIFT

(11) **EP 1 125 653 B1**
(45) Veröffentlichungstag und Bekanntmachung des Hinweises auf die Patenterteilung: **03.08.2005**
(21) Anmeldenummer: 00121550.8
(22) Anmeldetag: 30.09.2000
(51) Int. Cl.: B21D 5/08, B21C 37/08, B21D 5/12

(54) **Profilieranlage mit einer Profiliermaschine und mit einer Schweissvorrichtung**
Rollforming installation with a rollforming machine and a welding device
Installation pour profiler avec une machine à profiler et un dispositif de soudage

(30) Priorität: 18.02.2000 DE 10007496
(43) Veröffentlichungstag der Anmeldung: 22.08.2001
(73) Patentinhaber: DREISTERN GmbH & Co.KG, 79650 Schopfheim (DE)
(72) Erfinder:
(74) Vertreter: Patent- und Rechtsanwaltssozietät Maucher, Börjes & Kollegen

(56) Entgegenhaltungen:
- DE-A- 19 630 521
- US-A- 4 572 941
- US-A- 5 373 679
- US-A- 5 658 473

## Beschreibung

Die Erfindung betrifft eine Profilieranlage mit einer Profiliermaschine und mit einer in deren Verlauf angeordneten Schweißvorrichtung zum Herstellen eines aus metallischem Bandmaterial geformten Profils, wobei die Profiliermaschine in Vorschubrichtung des Werkstückes hintereinander angeordnete Werkzeuge aufweist, die jeweils im wesentlichen aus wenigstens zwei, auf insbesondere parallelen Achsen angeordneten, angetriebenen oder freilaufenden Formrollen gebildet sind, (siehe z.B. US-A-5 373 679).

Derartige Profilieranlagen sind in vielfältiger Form bekannt und dienen dazu, unterschiedlichste Profile, insbesondere Hohlprofile oder Rohre zu formen und zu fertigen.

Aus der DE 198 34 400 C1 ist eine derartige Profilieranlage mit einer Schweißvorrichtung zum Herstellen von Rohren bekannt, bei denen die zunächst voneinander abliegenden Ränder des Werkstückes aufeinanderzugebogen und dann mit Hilfe der Schweißvorrichtung verbunden werden. In Vorschubrichtung hinter der Schweißvorrichtung sind in der Regel weitere Werkzeuge zum Richten oder Kalibrieren des geschweißten Profiles vorhanden.

Bei von einem Rohrquerschnitt abweichenden Profilquerschnitten ist es bekannt, überlappende Bereiche der Ränder des Werkstückes zu bilden und diese durch gegenseitiges Prägen zu verbinden. Die Steifigkeit solcher Profile genügt jedoch nicht allen Anforderungen. Es ist deshalb auch schon bekannt, überlappende Bereiche an solchen rollgeformten Profilen durch Falzungen zu verbinden, was aufwendig ist und auch einen entsprechenden Materialmehraufwand im Bereich der Falzung erforderlich macht. Somit ergibt sich auch ein höheres Gewicht eines solchen Profiles.

Der Erfindung liegt deshalb die Aufgabe zugrunde, eine Profilieranlage der eingangs genannten Art zu schaffen, mit welcher Profile höherer Festigkeit oder Steifigkeit erzeugt werden können, wobei Bandmaterial mit einer geringeren Materialdicke eingesetzt werden können soll, ohne den maschinellen Aufwand erheblich zu erhöhen.

Diese Aufgabe wird durch eine Profilieranlage mit den Merkmalen des Anspruchs 1 gelöst.

Auf diese Weise können aus praktisch endlosem Bandmaterial geformte Profile mit zwei Schweißnähten versehen und stabilisiert werden, ohne daß zwei getrennte, entsprechend teuere und maschinell aufwendige Schweißvorrichtungen erforderlich sind. Durch die Anbringung von zwei Schweißnähten an einem rollgeformten Profil, beispielsweise einem Hohlprofil mit Quersteg, ergibt sich eine erhebliche Verbesserung der Steifigkeit dieses Profiles, wobei gleichzeitig Überlappungsbereiche zum Herstellen von Falzen vermieden werden, so daß also auch Material eingespart werden kann. Dennoch bleibt der maschinelle Aufwand im Rahmen, weil nur eine einzige Schweißvorrichtung erforderlich ist.

Die Schweißköpfe können in Gebrauchsstellung auf zueinander beabstandete und/oder einander direkt gegenüberliegende Berührstellen des Werkstückes wirkend im Bereich von dessen Vorschubweg angeordnet sein. Somit wird das Werkstück aufgrund des Vorschubes insbesondere durch die Rollform-Werkzeuge an diesen Schweißköpfen vorbeigeführt und dort mit den gewünschten Schweißnähten versehen.

Dabei kann im Bereich des jeweiligen Schweißkopfes wenigstens eine Stützrolle angeordnet sein, die das Werkstück im Bereich des Schweißkopfes also abstützt oder führt und an einem Ausweichen und Abweichen vom Schweißkopf hindert. Entsprechend genaue Schweißnähte können an den vorgesehenen Stellen entstehen.

Nach der Erfindung weist, die Schweißvorrichtung eine Laserstrahlquelle auf, wobei die davon abgegebene Energie aufgeteilt und den einzelnen Schweißköpfen zuführbar ist. Auf diese Weise läßt sich besonders gut der Gedanke verwirklichen, mit nur einer einzigen Energiequelle der Schweißvorrichtung wenigstens zwei Schweißköpfe zu versorgen und zu betreiben, also mit nur einer einzigen Energiequelle zumindest zwei Schweißnähte zur entsprechenden Stabilisierung eines rollgeformten Profiles an diesem anzubringen. Beispielsweise kann auf diese Weise ein Hohlprofil mit einem Quersteg geformt und an beiden Querschnittsenden des Quersteges verschweißt werden, was ein Zweikammer-Hohlprofil hoher Steifigkeit ergibt.

Besonders günstig ist es, wenn die eine Laserstrahlquelle aufweisende Schweißvorrichtung Prismen und/oder Spiegel zum Aufteilen des Laserstrahles und zum Zuleiten zu den Laserschweißköpfen aufweist. Die Schweißenergie kann also bei der Verwendung eines Laserschweißgerätes optisch aufgeteilt werden, was auch eine entsprechend einfache Zuleitung zu den Schweißköpfen unabhängig von deren Anordnung ermöglicht.

Die durch das Aufteilen des Laserstrahles der Laserstrahlquelle entstehenden Teilstrahlen können zumindest teilweise auch über Lichtleiter geführt sein.

Die Profilieranlage kann in zweckmäßiger Weise dahingehend ausgestaltet werden, daß in den einzelnen Laserstrahlgängen Unterbrecher zum gleichzeitigen oder zeitlich versetzten Unterbrechen des jeweiligen Teillaserstrahles zur Erzeugung von Steppschweißnähten vorgesehen sind. In vielen Fällen kann es nämlich ausreichen, Steppschweißnähte, also nicht ununterbrochen durchlaufende, sondern immer nur abschnittsweise verlaufende Schweißnähte zu erzeugen. Darüber hinaus erlaubt die Möglichkeit, die Schweißnaht zu unterbrechen, auch eine Unterbrechung des Vorschubes des gefertigten Profiles, um es beispielsweise jeweils in bestimmten Längen abzutrennen.

Die Schweißenergie kann an unterschiedliche Vorschubgeschwindigkeiten des Werkstückes in dem Sinne anpaßbar sein, daß den Schweißköpfen während eines langsamen Vorschubes, beispielsweise in einer Beschleunigungsphase des Werkstückes, weniger Schweißenergie, während des sich anschließenden Vorschubes bei voller Vorschubgeschwindigkeit mehr Energie und bei der Verminderung der Vorschubgeschwindigkeit bis zum Stillstand wieder weniger Energie zuführbar ist und daß die Zufuhr der Schweißenergie kurz vor oder bei Stillstand des Vorschubes abschaltbar oder abgeschaltet ist.

Während im Normalbetrieb mit ständigem Vorschub eine kontinuierliche Arbeitsweise erfolgt, kann aufgrund dieser Möglichkeit, die jeweilige Schweißenergie an unterschiedliche Vorschubgeschwindigkeiten anzupassen, auch ein diskontinuierlicher Ablauf mit wechselndem Vorschub und Stillstand durchgeführt werden. Der Stillstand kann, wie schon erwähnt, beispielsweise zum Abtrennen eines bestimmten Teiles des fertiggestellten Profiles genutzt werden, wobei dann die Profilieranlage in der Regel eine hinter der Schweißvorrichtung und zweckmäßigerweise auch hinter der Kalibrier- oder Richtvorrichtung eine Schneid- oder Trenneinrichtung aufweist.

Eine Einsparung an Energie während des Schweißvorganges kann insbesondere beim Verarbeiten von relativ dicken Werkstücken dadurch erzielt werden, daß die Profiliermaschine Prägerollen zum Einprägen von Materialschwächungen an dem Werkstück im Bereich der späteren Schweißnaht oder Schweißnähte aufweist. Die zu schweißende Stelle selbst hat dann aufgrund dieser Prägung gegenüber der eigentlichen Materialdicke eine geringere Querschnittsabmessung, so daß auch entsprechend weniger Schweißenergie zum Verschweißen genügt und/oder die Vorschub- und Schweißgeschwindigkeit höher gewählt werden können.

Je nach Form des zu bildenden und mehrfach zu schweißenden Profiles können die insbesondere mit Teil-Laserstrahlen betriebenen Schweißköpfe beidseits des durch die Profiliermaschine erzeugten Profiles und somit in einander entgegengesetzten Richtungen wirkend und dabei einander gegenüberliegend oder in Vorschubrichtung oder in der Höhe versetzt angeordnet und/oder in diesen unterschiedlichen Lagen einstellbar sein. Die Aufteilung der Schweißenergie eines Laserstrahles erlaubt also eine besonders zweckmäßige Anpassung der Schweißköpfe an unterschiedlichste Formen eines herzustellenden Profiles. Beispielsweise kann auf diese Weise ein Doppel-T-Profil gebildet werden, welches im Bereich seines Mittelsteges unterhalb der beiden Querstege jeweils eine Blechüberlappung und eine Schweißnaht aufweist. Die Querstege, die dabei aus einer Doppellage von gebogenem Blech bestehen können, können aber ihrerseits auch einen Hohlquerschnitt aufweisen, um eine entsprechende Steifigkeit in mehreren Richtungen zu erzielen.

Je nachdem, auf welcher Seite die Überlappung an einem Verbindungssteg zweckmäßig ist, können die Schweißköpfe angeordnet sein.

Eine weitere Möglichkeit, Schweißenergie einzusparen und/oder die Vorschubgeschwindigkeit des Werkstückes zu erhöhen, kann darin bestehen, daß die Schweißköpfe in Vorschubrichtung des Werkstückes bewegbar und nach einer vorgegebenen oder einstellbaren Strecke wieder zurückbewegbar sind, wobei die Bewegungsgeschwindigkeit der Schweißköpfe in Vorschubrichtung geringer als die Vorschubgeschwindigkeit des Werkstückes ist. Somit kann jeweils entsprechend der Bewegung des Schweißkopfes ein Stück einer Schweißnaht mit geringerer Energie des Schweißkopfes erzeugt werden, obwohl sich eine entsprechend stabile Schweißnaht erzeugen läßt, weil die Einwirkzeit in diesem Schweißbereich durch das Mitlaufen des Schweißkopfes mit dem Werkstück in Vorschubrichtung entsprechend höher ist. Dabei können beispielsweise zwei Schweißköpfe abwechselnd wirksam und wieder zurückstellbar sein, so daß immer der sich in Vorschubrichtung bewegende Schweißkopf eine Schweißnaht erzeugt. Sie können aber auch gleichzeitig beispielsweise zur Bildung zweier Stepp-Schweißnähte zunächst in Vorschubrichtung und dann wieder zurückbewegt werden. Die durch das Mitlaufen der Schweißköpfe verlängerte Einwirkzeit auf das Profil kann auch zur Steigerung von dessen Vorschubgeschwindigkeit ausgenutzt werden.

Vor allem bei Kombination einzelner oder mehrerer der vorbeschriebenen Merkmale und Maßnahmen ergibt sich eine Profilieranlage mit einer Profiliermaschine und einer Schweißvorrichtung, mit welcher längsnahtgeschweißte Profile oder Rohre mit zwei oder mehr Schweißnähten versehen werden können, welche als Steppnaht oder als kontinuierliche Naht ausgebildet sein können. Da die in der Schweißvorrichtung erzeugte Schweißenergie aufgeteilt wird, ist eine erhebliche Einsparung an Gewicht und Kosten möglich, indem durch das Anbringen der Schweißnähte trotz möglicher Materialeinsparung eine höhere Steifigkeit und Torsionsfestigkeit des zu fertigenden Profiles erreicht werden kann. Dennoch ergibt sich gegenüber einer Profilieranlage mit einer Schweißvorrichtung praktisch kein maschineller Mehraufwand.

Nachstehend ist ein Ausführungsbeispiel der Erfindung anhand der Zeichnung näher beschrieben. Es zeigt in schematisierter Darstellung:
- Fig.1: eine Seitenansicht einer Profilieranlage mit mehreren Rollform-Werkzeugen einer Profiliermaschine und einer dazwischen angeordneten Schweißvorrichtung auf Laserstrahlbasis,
- Fig.2: eine Draufsicht der Profilieranlage gemäß Fig.1 mit Umlenkspiegeln für den aufgeteilten Laserstrahl und dessen Zufuhr zu zwei versetzten Schweißköpfen,
- Fig.3: eine Ansicht der Profilieranlage in Richtung des Vorschubes im Bereich der Schweißvorrichtung mit einem zur Aufteilung eines Laserstrahles dienenden Prismas sowie
- Fig.4 bis Fig.7: perspektivische Ansichten von vier Beispielen von mit Hilfe der Profilieranlage gemäß den Figuren 1 bis 3 aus einem metallischem Bandmaterial hergestellten Profilen mit jeweils zwei Schweißnähten, wobei die entsprechenden Schweißköpfe zur Erzeugung der Schweißnähte durch "Blitze" angedeutet sind.

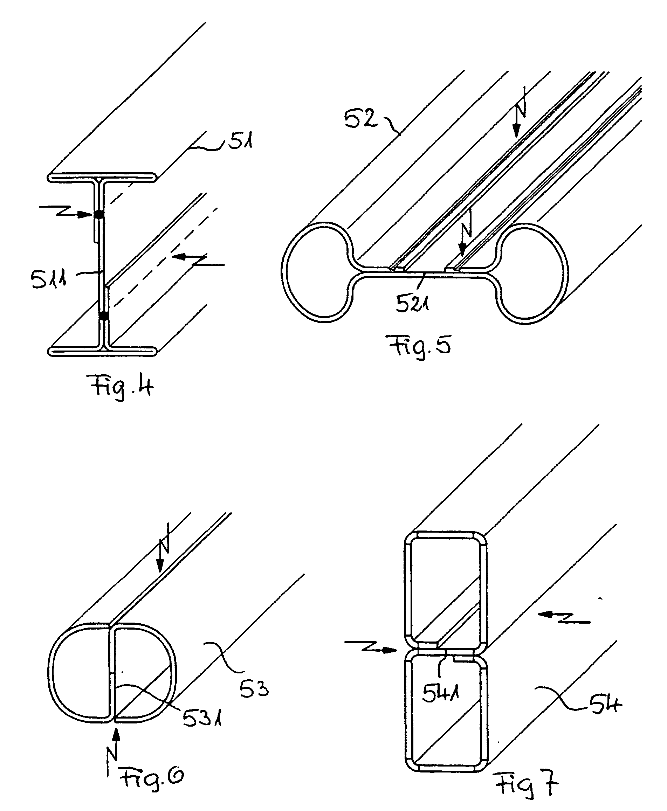

Eine im ganzen mit 1 bezeichnete Profilieranlage weist eine Profiliermaschine 2 und eine in deren Verlauf angeordnete, im ganzen mit 3 bezeichnete Schweißvorrichtung auf und dient zum Herstellen von aus metallischem Bandmaterial 5 geformten, in den Figuren 4 bis 7 beispielhaft dargestellten Profilen 51, 52, 53 oder 54, wobei aber weitere Profilquerschnitte möglich sind.

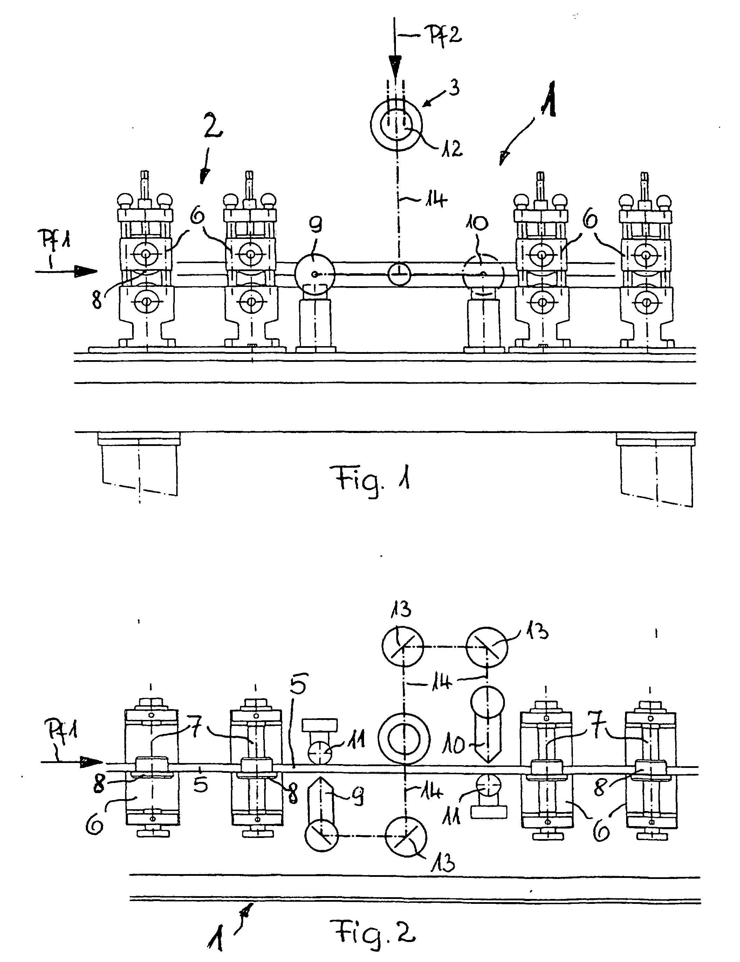

Die Profiliermaschine 2 weist dabei in der durch den Pfeil Pf1 angedeuteten Vorschubrichtung des Werkstückes 5 hintereinander angeordnete Werkzeuge 6 auf, die jeweils aus wenigstens zwei auf parallelen Achsen 7 angeordneten, angetriebenen oder freilaufenden Formrollen 8 gebildet sind. Dabei erkennt man in den Figuren 1 und 2 sowohl vor als auch hinter der Schweißvorrichtung 3 solche Werkzeuge 6, wobei die in Vorschubrichtung vor der Schweißvorrichtung 3 befindlichen Werkzeuge 6 das eigentliche Profil formen, während die hinter der Schweißvorrichtung 3 befindlichen Werkzeuge 6 zum Kalibrieren und/oder Richten dieses dann geschweißten Profiles dienen.

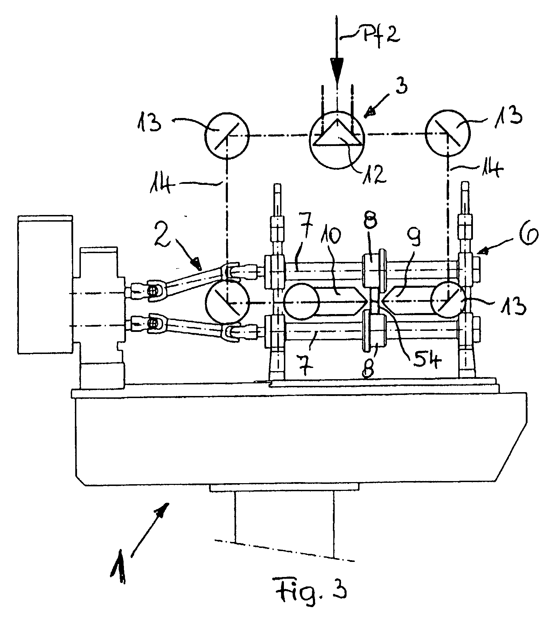

In den Figuren 1 bis 3 ist durch einen Pfeil Pf2 angedeutet, daß die Schweißvorrichtung 3 eine einzige Laserstrahlquelle aufweist, die mit wenigstens zwei Schweißköpfen 9 und 10 zur Erzeugung von wenigstens zwei Schweißnähten am Werkstück 5 verbunden ist. Die Schweißköpfe 9 und 10 sind dabei in Gebrauchsstellung auf zueinander beabstandete Berührstellen des Werkstückes 5 wirkend im Bereich von dessen Vorschubweg angeordnet, wie man es vor allem bei gleichzeitiger Betrachtung der Figuren 2 und 3 erkennt. Auf der dem jeweiligen Schweißkopf 9 oder 10 abgewandten Seite des Werkstückes 5 ist jeweils eine Stützrolle 11 angeordnet, um das Werkstück 5 im Bereich der Anbringung der Schweißnaht ausgerichtet zu halten.

Wie bereits erwähnt weist die Schweißvorrichtung 3 eine nicht näher dargestellte Laserstrahlquelle auf und enthält gemäß den Figuren 2 und 3 ein Prisma 12 sowie mehrere Spiegel 13, um den von der Laserstrahlquelle ausgehenden Laserstrahl aufzuteilen und den einzelnen Laserschweißköpfen 9 und 10 zuzuleiten. Der Verlauf eines Laserstrahles 14 ist dabei mit strichpunktierten Linien in den Figuren 1 bis 3 angedeutet. Mit nur einer Laserstrahlquelle können also zwei Schweißköpfe 9 und 10 gleichzeitig betrieben werden. Erforderlichenfalls können die durch das Aufteilen des Laserstrahles entstehenden Teilstrahlen 14 auch zumindest teilweise über Lichtleiter geführt sein.

Es sei erwähnt, daß die Schweißvorrichtung 3 auch einen Hochfrequenzgenerator aufweisen könnte, dessen Energie aufgeteilt und den einzelnen Schweißköpfen 9 und 10 zugeführt wird, wobei dann ein entsprechender Hochfrequenzgenerator einer solchen Schweißvorrichtung wenigstens zwei Schwingkreise zum Aufteilen dieser Hochfrequenzenergie aufweist, welche als Schleifkontakte ausgebildeten Schweißköpfen 9 und 10 zuführbar wäre. Die Verwendung eines Hochfrequenzgenerator fällt nicht unter den Schutzbereich der Ansprüche.

In nicht näher dargestellter Weise können in den beiden Laserstrahlgängen Unterbrecher zum gleichzeitigen oder zeitlich versetzten Unterbrechen des jeweiligen Teillaserstrahles zur Erzeugung von Steppschweißnähten vorgesehen sein. Ferner kann die Schweißenergie an unterschiedliche Vorschubgeschwindigkeiten des Werkstückes 5 in dem Sinne angepaßt werden, daß den Schweißköpfen 9 und 10 während eines langsamen Vorschubes, beispielsweise in einer Beschleunigungsphase; die auf einen Stillstand des Werkstückes 5 folgt, weniger Schweißenergie, während des sich anschließenden Vorschubes bei voller Vorschubgeschwindigkeit dann mehr beziehungsweise die volle Energie und bei einer Verminderung der Vorschubgeschwindigkeit wieder weniger Energie zugeführt wird. Kurz vor oder bei Stillstand des Vorschubes kann die Zufuhr der Schweißenergie vollständig abschaltbar sein. Somit können mit der Profilieranlage 1 kontinuierliche und durchgehende Schweißnähte erzeugt werden, wenn ein entsprechend kontinuierlicher Vorschub und eine kontinuierliche Fertigung der Profile erfolgt, es ist aber auch eine diskontinuierliche Arbeitsweise möglich, bei welcher der Vorschub immer wieder unterbrochen wird, beispielsweise um Profilstücke nach ihrer Fertigstellung abzutrennen.

Im Ausführungsbeispiel sind die mittels Teil-Laserstrahlen beschickten Schweißköpfe 9 und 10 beidseits des durch die Profiliermaschine 2 erzeugten Werkstückes 5 oder Profiles 51 bis 54 und somit in einander entgegengesetzten Richtungen wirkend und dabei einander gegenüberliegend angeordnet. Dabei sind sie aber in gleicher Höhe vorgesehen. Somit können einander gegenüberliegende Schweißnähte beispielsweise an einem Profil 54 gemäß Fig.7 oder auch an einem solchen gemäß Fig.6 angebracht werden.

Die Schweißköpfe 9 und 10 können aber auch in unterschiedlichen Höhen vorgesehen sein, um ein Doppel-T-Profil 51 gemäß Fig.4 nach seiner entsprechenden Rollformung in Überlappungsbereichen an dem Mittelsteg 511 schweißen zu können.

Fig.5 zeigt ein Beispiel, bei welchem Überlappungsbereiche an einem Mittelsteg 521 auf derselben Seite liegen, so daß in diesem Falle zwei Schweißköpfe 9 und 10 auf derselben Seite des Profiles 52, dabei aber in der Höhe und auch zweckmäßigerweise in Vorschubrichtung gegeneinander versetzt anzuordnen sind. Günstig ist es also, wenn die Schweißköpfe 9 und 10 an der Profilieranlage 1 einstellbar sind.

Die in den Figuren 4 bis 7 dargestellten Beispiele von Profilen 51, 52, 53 und 54 zeigen, wie mit der Vorrichtung 1 in zweckmäßiger Weise mit nur einer einzigen Schweißvorrichtung 3 jeweils zwei Schweißnähte an dem Werkstück 5 angebracht werden können, um dieses mit hoher Steifigkeit und Stabilität zu versehen.

Fig.4 zeigt dabei ein Doppel-T-Profil 51, welches aus einem Blechband gebildet wurde, wobei die Blechränder jeweils auf dem Quersteg 511 Überlappungen bilden und dort verschweißt sind.

Fig.5 zeigt ein der Fig.4 ähnliches Profil 52, bei welchem jedoch beidseits des Quersteges 521 Hohlprofile vorgesehen sind und die Überlappungen der Ränder des ursprünglichen Blechbandes auf derselben Seite des Quersteges 521 angeordnet sind.

Dabei ist in dieser Figur zusätzlich angedeutet, daß der Bereich der Schweißnaht zuvor eingeprägt werden kann, so daß im Bereich der Schweißnaht der Materialquerschnitt vermindert ist und dadurch Schweißenergie eingespart wird. Dies kann zweckmäßigerweise dadurch bewirkt werden, daß in der Profiliermaschine 2 in Vorschubrichtung vor der Schweißvorrichtung 3 eine oder mehrere Prägerollen zum Einprägen dieser Materialschwächung vorgesehen sind. Dies ist besonders dann zweckmäßig, wenn das Ausgangsmaterial eine relativ große Dicke hat, die ohne eine solche Prägung eine hohe Schweißenergie erfordern würde.

Fig.6 zeigt ein Rohr 53 mit einem inneren Quersteg, welches durch eine etwa S-förmige Formgebung gebildet ist, wobei die beiden ursprünglichen Ränder jeweils an dem Bereich eines Mittelsteges 531 enden und dort verschweißt werden.

Vergleichbar mit der Anordnung nach Fig.6 ist das Profil 54 gemäß Fig.7, wobei es im Bereich des Mittelquersteges 541 noch Überlappungen gibt und die Querschnitte der einzelnen Kammern dieses Hohlprofiles 54 eine Rechteckform haben, die zu einer besonders hohen Steifigkeit und Torsionsfestigkeit führt.

An den Beispielen gemäß Fig.4 bis 7 wird deutlich, daß es in vielen Fällen von aus metallischem Bandmaterial gebildeten Profilen vorteilhaft sein kann, insbesondere die ursprünglichen Ränder des Ausgangsmateriales in einem Überlappungs- oder Berührbereich zu verschweißen, so daß gemäß dieser ursprünglichen zwei Ränder auch zwei Schweißnähte günstig sein können. Es sind aber weitere Profilquerschnitte möglich, bei denen auch drei oder noch mehr Schweißnähte sinnvoll sein können, so daß eine noch weitergehende Aufteilung der Schweißenergie der Schweißvorrichtung 3 und Verteilung auf entsprechend mehr Schweißköpfe möglich ist.

Die Profilieranlage 1 mit einer mehrere Rollform-Werkzeuge 6 aufweisenden Profiliermaschine 2 und einer in deren Verlauf angeordneten Schweißvorrichtung 3 ermöglicht die Anbringung von mehr als einer Schweißnaht an einem herzustellenden Profil 51, 52, 53 oder 54, wobei die Schweißvorrichtung eine einzige Energiequelle aufweist, indem diese mit wenigstens zwei Schweißköpfen 9 und 10 zur Erzeugung der beiden Schweißnähte verbunden ist. Die von der Schweißvorrichtung 3 abgegebene Energie wird dabei auf die einzelnen Schweißköpfe 9 und 10 aufgeteilt. Dies ist besonders günstig weil eine Schweißvorrichtung 3 mit einer Laserstrahlquelle verwendet wird, wobei der Laserstrahl in mehrere Teil-Laserstrahlen aufgeteilt und den einzelnen Laserstrahlköpfen zugeleitet werden kann.

## Patentansprüche

1. Profilieranlage (1) mit einer Profiliermaschine (2) und mit einer in deren Verlauf angeordneten Schweißvorrichtung (3) zum Herstellen eines aus metallischem Bandmaterial (5) geformten Profils, wobei die Schweißvorrichtung (3) wenigstens zwei Schweißköpfe (9,10) zur Erzeugung wenigstens zweier Schweißmähte am Profil aufweist, wobei die Profiliermaschine (2) in Vorschubrichtung des Bandmaterials (5) hintereinander angeordnete Werkzeuge (6) aufweist, die jeweils im wesentlichen aus wenigstens zwei auf insbesondere parallelen Achsen (7) angeordneten, angetriebenen oder freilaufenden Formrollen (8) gebildet sind, **dadurch gekennzeichnet, dass** die Schweißvorrichtung (3) eine einzige Energiequelle aufweist, die mit den wenigstens zwei Schweißköpfen (9, 10) zur Erzeugung der wenigstens zweien Schweißnähte am Profil verbunden ist, dass die Schweißvorrichtung (3) eine Laserstrahlquelle aufweist und dass die davon abgegebene Energie aufgeteilt und den einzelnen Schweißköpfen (9,10) zuführbar ist.

2. Profilieranlage nach Anspruch 1, **dadurch gekennzeichnet, daß** die Schweißköpfe (9,10) in Gebrauchsstellung auf zueinander beabstandete und/oder einander direkt gegenüber liegende Berührstellen des Werkstückes (5) wirkend im Bereich von dessen Vorschubweg angeordnet sind.

3. Profilieranlage nach Anspruch 1 oder 2, **dadurch gekennzeichnet, daß** im Bereich des jeweiligen Schweißkopfes (9,10) wenigstens eine Stützrolle (11) angeordnet ist.

4. Profilieranlage nach einem der Ansprüche 1 bis 3, **dadurch gekennzeichnet, daß** die eine Laserstrahlquelle aufweisende Schweißvorrichtung (3) Prismen und/oder Spiegel zum Aufteilen des Laserstrahles und zum Zuleiten zu den Laserschweißköpfen (9,10) aufweist.

5. Profilieranlage nach einem der vorstehenden Ansprüche, **dadurch gekennzeichnet, daß** in den einzelnen Laserstrahlgängen Unterbrecher zum gleichzeitigen oder zeitlich versetzten Unterbrechen des jeweiligen Teillaserstrahles (14) zur Erzeugung von Steppschweißnähten vorgesehen sind.

6. Profilieranlage nach einem der Ansprüche 1 bis 5, **dadurch gekennzeichnet, daß** die Schweißenergie an unterschiedliche Vorschubgeschwindigkeiten des Werkstückes (5) in dem Sinne anpaßbar ist, daß den Schweißköpfen (9,10) während eines langsamen Vorschubes, beispielsweise in einer Beschleunigungsphase, weniger Schweißenergie, während des sich anschließenden Vorschubes bei voller Vorschubgeschwindigkeit mehr Energie und bei einer Verminderung der Vorschubgeschwindigkeit bis zum Stillstand wieder weniger Energie zuführbar ist und daß die Zufuhr der Schweißenergie kurz vor oder bei Stillstand des Vorschubes abschaltbar oder abgeschaltet ist.

7. Profilieranlage nach einem der Ansprüche 1 bis 6, **dadurch gekennzeichnet, daß** die Profiliermaschine Prägerollen zum Einprägen von Materialschwächungen an dem Werkstück im Bereich der späteren Schweißnaht aufweist.

8. Profilieranlage nach einem der Ansprüche 1 bis 7, **dadurch gekennzeichnet, daß** die Schweißköpfe (9,10) beweglich und an unterschiedliche Profilquerschnitte und/oder unterschiedliche Lagen der Schweißnähte an den jeweils hergestellten Profilen anpaßbar sind.

9. Profilieranlage nach einem der Ansprüche 1 bis 8, **dadurch gekennzeichnet, daß** die Schweißköpfe (9, 10) beidseits des durch die Profiliermaschine (2) erzeugten Profiles und somit in einander entgegengesetzten Richtungen wirkend und dabei einander gegenüberliegend oder in Vorschubrichtung oder in der Höhe versetzt angeordnet und/oder in diesen Lagen einstellbar sind.

10. Profilieranlage nach einem der Ansprüche 1 bis 9, **dadurch gekennzeichnet, daß** die Schweißköpfe (9,10) in Vorschubrichtung des Werkstückes bewegbar und nach einer vorgegebenen oder einstellbaren Strecke wieder zurückbewegbar sind, wobei die Bewegungsgeschwindigkeit der Schweißköpfe (9,10) in Vorschubrichtung geringer als die Vorschubgeschwindigkeit des Werkstückes ist.

11. Profilieranlage nach einem der Ansprüche 1 bis 10, **dadurch gekennzeichnet, daß** die Schweißköpfe (9,10) abwechselnd in Vorschubrichtung bewegbar und wirksam oder gleichzeitig in Vorschubrichtung bewegbar und wirksam und dann zurückstellbar sind.

## Claims

1. Rollforming installation (1) having a rollforming machine (2) and a welding apparatus (3) disposed in its path for producing a rolled profile from metallic strip material (5), the welding apparatus (3) having at least two welding heads (9, 10) for producing at least two weld seams on the profile, the rollforming machine (2) having tools (6) arranged one behind the other in the direction of advance of the strip material (5), said tools being essentially formed from at least two forming rolls (8) mounted on, in particular, parallel shafts, driven or freely rotating, **characterised in that** the welding apparatus (3) has a single energy source which is connected to the minimum of two welding heads (9, 10) for producing the minimum of two weld seams on the profile, **in that** the welding apparatus (3) has a laser welding source and **in that** the energy given off by it can be divided up and supplied to the individual welding heads (9, 10).

2. Rollforming installation according to claim 1, **characterised in that** in the operational position the welding heads (9, 10) are arranged so as to act on contact points of the workpiece (5) which are spaced apart from one another and/or directly opposite one another, in the region of the path of advance of the workpiece (5).

3. Rollforming installation according to claim 1 or 2, **characterised in that** at least one support roller (11) is disposed in the region of the particular welding head (9, 10).

4. Rollforming installation according to any one of claims 1 to 3, **characterised in that** the welding apparatus (3) comprising a source of laser radiation comprises prisms and/or mirrors for splitting the laser beam and for directing it to the laser welding heads (9, 10).

5. Rollforming installation according to one of the preceding claims, **characterised in that** interrupters are provided in the individual laser beam paths for simultaneously or sequentially interrupting the particular partial laser beam (14) in order to produce stitching weld seams.

6. Rollforming installation according to any one of claims 1 to 5, **characterised in that** the welding energy can be adapted to different speeds of advance of the workpiece (5), in the sense that it is possible for less welding energy to be supplied to the welding heads (9, 10) during a slow advance, for example during an acceleration phase, for more energy to be supplied during the subsequent advance at full speed and, when the speed of advance is reduced to a standstill, for less energy to be supplied again, and **in that** the supply of welding energy may be or is switched off shortly before or when the advance is at a standstill.

7. Rollforming installation according to any one of claims 1 to 6, **characterised in that** the rollforming machine comprises embossing rollers for embossing frangible points on the workpiece in the region of the subsequent weld seam.

8. Rollforming installation according to any one of claims 1 to 7, **characterised in that** the welding heads (9, 10) are movable and can be adapted to different profile cross-sections and/or different positions of the weld seam on the particular profiles manufactured.

9. Rollforming installation according to any one of claims 1 to 8, **characterised in that** the welding heads (9, 10) are arranged on both sides of the profile produced by the rollforming machine (2) and are thus arranged to act in opposite directions and are thereby opposite one another or offset in the direction of advance or in height and/or are adjustable in these positions.

10. Rollforming installation according to any one of claims 1 to 9, **characterised in that** the welding heads (9, 10) are movable in the direction of advance of the workpiece and can be moved back again after a given distance or an adjustable distance, the speed of movement of the welding heads (9, 10) in the direction of advance being less than the speed of advance of the workpiece.

11. Rollforming installation according to any one of claims 1 to 10, **characterised in that** the welding heads (9, 10) are alternately movable and effective in the direction of advance or are simultaneously movable and effective in the direction of advance and can then be reset.

## Revendications

1. Installation de profilage (1) comportant une machine à profiler (2) et un dispositif de soudage (3), agencé dans le trajet de celle-ci et destiné à réaliser un profilé à partir d'une bande de matériau métallique (5), le dispositif de soudage (3) étant muni d'au moins deux têtes de soudage (9, 10) destinées à réaliser au moins deux cordons de soudure sur le profilé, la machine à profiler (2) comportant des outils (6), qui sont agencés les uns derrière les autres dans la direction d'avance de la bande de matériau (5) et qui sont formés chacun sensiblement par au moins deux galets de formage (8), qui sont agencés sur des axes (7) en particulier parallèles, sont entraînés en mouvement ou sont librement rotatifs, **caractérisée en ce que** le dispositif de soudage (3) comporte une seule source d'énergie, qui est couplée avec lesdites au moins deux têtes de soudage (9, 10) pour réaliser lesdits au moins deux cordons de soudure sur le profilé, **en ce que** le dispositif de soudage (3) comporte une source de rayons laser et **en ce que** l'énergie fournie par celle-ci est partagée et peut être distribuée vers les différentes têtes de soudage (9, 10).

2. Installation de profilage selon la revendication 1, **caractérisée en ce que** les têtes de soudage (9, 10), en position de service, sont disposées sur des zones de contact de la pièce à souder (5), qui sont écartées l'une de l'autre ou sont directement en regard l'une de l'autre, de manière à agir dans la zone du trajet d'avance de ladite pièce.

3. Installation de profilage selon la revendication 1 ou 2, **caractérisée en ce qu'**au moins un rouleau d'appui (11) est agencé dans la zone de chaque tête de soudage (9, 10).

4. Installation de profilage selon l'une quelconque des revendications 1 à 3, **caractérisée en ce que** le dispositif de soudage (3), équipé d'une source de rayons laser, comporte des prismes et/ou miroirs destinés à partager le rayon laser et à le diriger vers les têtes de soudage (9, 10).

5. Installation de profilage selon l'une quelconque des revendications précédentes, **caractérisée en ce que**, dans les trajets de chaque rayon laser, il est prévu des dispositifs d'interruption destinés à interrompre de manière simultanée ou décalée dans le temps le rayon laser partiel (14) respectif en vue de réaliser des soudures en ligne continue par points.

6. Installation de profilage selon l'une quelconque des revendications 1 à 5, **caractérisée en ce que** l'énergie de soudage peut être adaptée à différentes vitesses d'avance de la pièce à souder (5) en ce sens qu'une plus faible quantité d'énergie de soudage est amenée vers les têtes de soudage (9, 10) pendant un mouvement d'avance lent, par exemple dans une phase d'accélération, alors que pendant le mouvement d'avance consécutif à pleine vitesse, une plus grande quantité d'énergie peut être acheminée et, pendant une diminution de la vitesse d'avance jusqu'à l'arrêt complet, une plus faible quantité d'énergie peut à nouveau être acheminée, et **en ce que** l'acheminement de l'énergie de soudage peut être interrompu ou est interrompu juste avant ou pendant l'immobilisation du mouvement d'avance.

7. Installation de profilage selon l'une quelconque des revendications 1 à 6, **caractérisée en ce que** la machine de profilage comporte des rouleaux de pressage, destinés à presser, dans la zone du futur cordon de soudage, des zones de diminution de matière dans la pièce à traiter.

8. Installation de profilage selon l'une quelconque des revendications 1 à 7, **caractérisée en ce que** les têtes de soudage (9, 10) sont mobiles et peuvent être adaptées à différentes sections de profilé et/ou différentes positions des cordons de soudure sur les profilés à réaliser respectivement.

9. Installation de profilage selon l'une quelconque des revendications 1 à 8, **caractérisée en ce que** les têtes de soudage (9, 10) sont disposées de part et d'autre du profilé à réaliser avec la machine de profilage (2) et sont donc disposées en agissant dans des directions opposées l'une à l'autre et sont, dans ce cas, situées en regard l'une de l'autre ou décalées dans la direction d'avance ou en hauteur et/ou peuvent être réglées dans ces positions.

10. Installation de profilage selon l'une quelconque des revendications 1 à 9, **caractérisée en ce que** les têtes de soudage (9, 10) sont mobiles dans la direction d'avance de la pièce à souder et, après un trajet prédéfini ou réglable, peuvent être ramenées dans leur position initiale, la vitesse de mouvement des têtes de soudage (9, 10) dans la direction d'avance étant plus faible que la vitesse d'avance de la pièce à souder.

11. Installation de profilage selon l'une quelconque des revendications 1 à 10, **caractérisée en ce que** les têtes de soudage (9, 10) sont mobiles et agissent en alternance dans la direction d'avance ou sont mobiles et agissent simultanément dans la direction d'avance et peuvent ensuite être ramenées dans leur position initiale.
